# EUROPÄISCHE PATENTSCHRIFT

(11) **EP 3 540 129 B1**
(45) Veröffentlichungstag und Bekanntmachung des Hinweises auf die Patenterteilung: **03.06.2020**
(21) Anmeldenummer: 18161187.2
(22) Anmeldetag: 12.03.2018
(51) Int. Cl.: E03C 1/04, E03C 1/10, F16K 31/60

(54) **SANITÄRARMATUR**
SANITARY FITTING
ROBINETTERIE SANITAIRE

(43) Veröffentlichungstag der Anmeldung: 18.09.2019
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- EP-A1- 0 778 434
- EP-A1- 3 133 462
- EP-A2- 0 745 798
- DE-A1- 3 537 474
- DE-A1- 10 102 479
- DE-B4-102004 050 996

## Beschreibung

Die Erfindung betrifft eine Sanitärarmatur zur Aufnahme eines über eine drehbar gelagerte, einen unrunden Endabschnitt aufweisende Spindel betätigbaren Mischventils, insbesondere einer Mischventil- oder Thermostatmischventilkartusche, nach dem Oberbegriff des Patentanspruchs 1.

Zur Begrenzung der maximalen Wassertemperatur einer Sanitärarmatur wird in der EP 0 973 083 A2 ein sanitäres Thermostatmischventil vorgeschlagen, das als thermostatischer Vormischer dem Heißwasserzulauf einer Sanitärarmatur vorgeschaltet wird und über das die maximale Vorlauftemperatur des Heißwasserzulaufs einstellbar ist.

Durch längere Verweildauer des Trinkwassers im Leitungssystem kann es zu bakteriellen Wachstum und einer Erhöhung der Bakterienzahl im Trinkwasser kommen. Eine besondere Bedeutung für die Trinkwasserhygiene haben Legionellen, die sich insbesondere im Temperaturbereich von 20°C bis ca. 55°C in Biofilmen auf gesundheitlich bedenkliche Konzentrationen vermehren. Daher ist es erforderlich, Sanitärarmaturen regelmäßig zu desinfizieren. Hierzu ist es erforderlich, die Vorlauftemperatur bei dem aus der EP 0 973 083 A2 vorgeschlagenen thermostatischen Vormischer auf eine Spültemperatur von 60°C bis 70°C zu erhöhen. Dabei ist es wichtig, nach dem erfolgten Desinfektionsvorgang die voreingestellte Temperatur wieder neu einzustellen, um ein Verbrühen eines Benutzers mit zu heißem Wasser zu vermeiden.

Vor diesem Hintergrund wird in der DE 10 2004 050 996 B4 ein Thermostatmischventil vorgeschlagen, bei dem in einem einen Kaltwasserzulauf, einen Heißwasserzulauf und einen Mischwasserzulauf aufweisenden Gehäuse zur Regelung der Wasserauslasstemperatur ein Thermostatelement angeordnet ist, das an einem Anschlag anliegt, der von einer Sicherheitsfeder gegen das Thermostatelement gedrückt wird. Zur Einstellung der Solltemperatur ist ein Einstellgriff angeordnet, der über ein Gewinde axial bewegbar ist und über den die Position des Anschlags mit dem an diesem anliegenden Thermostatelement verschiebbar ist. Zur temporären Einstellung einer für die Desinfektion erforderlichen hohen Wassertemperatur ist der Anschlag mit einer Kipphebelanordnung verbunden, über die der Anschlag vollständig von dem Thermostatelement wegbewegt werden kann. Beim Rückbewegen der Kipphebelanordnung in ihre Ausgangsposition wird der Anschlag wieder in die über den Einstellgriff eingestellte Position zurückbewegt, wodurch die voreingestellte Solltemperatur wieder eingestellt ist, ohne dass es einer erneuten Einstellung bedarf.

Nachteilig an dem vorbekannten Thermostatmischventil ist, dass dieses komplex aufgebaut ist und durch seine einstückige Ausgestaltung als Spezialprodukt zu produzieren ist. Im Falle eines Mangels ist dieses als Ganzes zu ersetzen. Nicht zuletzt kann bei der zur Bewegung des Anschlags vorgesehenen Kipphebelanordnung durch im Laufe der Zeit anhaftende Schmutzpartikel das Zurückgleiten des Anschlags behindert sein.

Darüber hinaus ist eine Sanitärarmatur aus der EP 0 778 434 A bekannt geworden. Sie weist einen Anschlagring mit einem Ringnutbogenstück auf, in das ein Vorsprung einer Griffhülse eingreift. Der Anschlagring, der mit dem Ringnutbogenstück den Sollwertbereich begrenzt, kann nachträglich geringfügig verändert werden. Dazu muss das Griffteil entfernt und die Verzahnung zwischen Griffteil und Grundkörper gelöst werden. Dies ist vergleichsweise aufwändig.

Hier will Erfindung Abhilfe schaffen. Der Erfindung liegt die Aufgabe zu Grunde, eine als Vormischer, insbesondere als thermostatischer Vormischer einsetzbare Sanitärarmatur bereitzustellen, die einfach und robust aufgebaut ist, kostengünstig herzustellen ist und die eine temporäre Einstellung einer für die Desinfektion erforderlichen hohen Wassertemperatur ohne eine nachfolgende weitere Einstellung der zuvor eingestellten Solltemperatur ermöglicht. Gemäß der Erfindung wird diese Aufgabe durch eine Sanitärarmatur mit den Merkmalen des Patentanspruchs 1 gelöst.

Der Erfindung liegt der Gedanke zu Grunde, eine Sanitärarmatur bereitzustellen, bei der die zusätzliche Funktionalität der temporären Einstellung einer Maximaltemperatur unter Beibehaltung der zuvor eingestellten Solltemperatur vollständig in die Armatur zu integriert ist. Dabei ist insbesondere die Verwendung einer Standard-Mischventilkartusche, insbesondere Standard-Thermostatmischventilkartusche ermöglicht. Der unmittelbare Einbau von Mischventilkomponenten in die Armatur, wie dies beispielweise in der DE 10 2004 050 996 B4 gelehrt ist, ist jedoch gleichermaßen ermöglicht. Daher sind vorliegend unter dem Begriff "Mischventil" auch jegliche Komponentenaggregationen bzw. -kombinationen zu subsummieren, welche die Aufgabe eines Mischventils übernehmen und über eine drehbare Spindel bedienbar sind.

Bei der Verwendung einer Standard-Mischventil- oder Thermostatmischventilkartusche muss diese für das vorhandene Aufgabenfeld nicht verändert werden. Hierzu ist der Grundkörper mit einem axialen Kartuschenaufnahmeraum für die Mischventilkartusche versehen, in den wenigstens zwei radial angeordnete Zulaufkanäle und wenigstens ein angeordneter Ablaufkanal münden. Auf den Grundkörper ist ein Mitnehmerring drehbar gelagert angeordnet, auf dem ein zur drehfesten Aufnahme des unrunden Abschnitts der Spindel ausgebildetes Griffteil aufliegt. Mitnehmerring und Bediengriff sind über einen Eingriff in genau einer Relativposition zueinander formschlüssig verbindbar, wobei Mittel zur temporären Fixierung einer Drehposition des Mitnehmerrings an dem Grundkörper angeordnet sind. Zur Einstellung der Solltemperatur kann die Spindel der Thermostatmischventilkartusche über das mit dieser verbundene Griffteil gedreht werden, wobei der Mitnehmerring mit dem Griffteil im Eingriff ist und somit mitbewegt wird. Zur temporären Einstellung einer Maximaltemperatur kann das Griffteil aus dem Eingriff mit dem Mitnehmerring herausbewegt werden und der Mitnehmerring kann in seiner Sollposition fixiert werden. Nachfolgend kann die Spindel der aufgenommenen Mischventilkartusche, insbesondere Thermostat-mischventilkartusche über das Griffteil weiter bewegt werden, bis die gewünschte Maximaltemperatur eingestellt ist. Zur Wiederherstellung der voreingestellten Temperatur muss das Griffteil lediglich wieder soweit zurückgedreht werden, bis der Eingriff zwischen Griffteil und an dem Grundkörper fixiertem Mitnehmerring wiederhergestellt ist.

Unter dem Begriff "Eingriff' ist vorliegend jegliche Gestaltung von Griffteil und Mitnehmerring zu verstehen, bei der wenigstens ein Vorsprung in eine mit diesem korrespondierende Ausnehmung zur Herstellung einer formschlüssigen Verbindung eingreift.

Die erfindungsgemäße Sanitärarmatur eignet sich gleichermaßen für den Einsatz von "einfachen" Mischventilkartuschen sowie auch von Thermostatmischventilkartuschen oder von Komponentenkombinationen, welche die Funktion einer Mischventilkartusche erfüllen. Gleichwohl nachfolgend insbesondere auf den Einsatz einer (komfortablen) Thermostatmischventilkartusche Bezug genommen wird, sei an dieser Stelle nochmals ausdrücklich angemerkt, dass die Ausführungen gleichermaßen für den Einsatz eines (weniger komfortablen, dafür jedoch kostengünstigeren) Mischventils bzw. einer Mischventilkartusche ohne Thermostatelement gelten. Kern der Erfindung ist die Festlegung einer Solltemperatur (als Regelgröße oder fixes Mischungsverhältnis von zulaufendem Heiß- und Kaltwasser) bei temporärer Einstellung einer höheren Desinfektionstemperatur, wonach einfach, ohne erneute Einstellung die zuvor anliegende Solltemperatur wieder hergestellt werden kann, wobei diese Funktion einzig über die Sanitärarmatur bereitgestellt wird - unabhängig von der Ausgestaltung des von ihr aufgenommenen Mischventils.

In Weiterbildung der Erfindung ist der Eingriff durch eine an dem Mitnehmerring angeordneten Nase oder eine an diesem angeordnete Ausnehmung gebildet, die mit einer an dem Griffstück angeordneten Ausnehmung bzw. eine angeordneten Nase korrespondiert. Hierdurch ist eine eindeutige Positionierung des Griffstücks zum Mitnehmerring in einer Eingriffsstellung gewährleistet.

In Ausgestaltung der Erfindung ist der Kartuschenaufnahmeraum zylindrisch ausgebildet. Dabei ist der zylindrische Kartuschenaufnahmeraum vorzugsweise außermittig in dem bevorzugt zylindrisch ausgebildeten Anschlusskörper angeordnet. Hierdurch ist an einer Seite des Grundkörpers eine vergrößerte Wandstärke erzielt, wodurch eine stabile Anordnung von Anschlussmuffen für die Zulauf- und Ablaufkanäle, beispielsweise in Form von Schraubverbindungen ermöglicht ist. Bevorzugt ist der Grundkörper aus Kunststoff hergestellt. Alternativ kann der Grundkörper auch aus Metall, insbesondere aus Messing hergestellt sein.

In weiterer Ausgestaltung der Erfindung umfassen die Mittel zur temporären Fixierung der Drehposition des Mitnehmerrings eine Schraube, die in einer in den Grundkörper eingebrachten Gewindebohrung geführt gegen den Mitnehmerring verspannbar ist. Hierdurch ist eine einfache Festlegung des Mitnehmerrings von außen ermöglicht. Dabei ist die Schraube vorzugsweise in Art einer Madenschraube ausgebildet, die besonders bevorzugt einen nicht standardisierten Werkzeugeingriff, wie beispielsweise eine unsymmetrische Ausnehmung aufweist, wodurch einer unbefugten Verstellung entgegengewirkt ist.

In Weiterbildung der Erfindung ist ein Federelement angeordnet, über welches das Griffstück gegen den Mitnehmerring vorgespannt ist. Hierdurch ist die Herstellung des Eingriffs zwischen Mitnehmerring und Griffteil bei Drehung des Griffteils unterstützt.

In Ausgestaltung der Erfindung ist in dem Griffteil mittig eine axiale, unrunde Führung zur Aufnahme der unrunden Spindel eines von dem Grundkörper aufgenommenen Mischventils, insbesondere einer Mischventil- oder Thermostat-mischventilkartusche angeordnet. Hierdurch ist eine drehfeste Verbindung zwischen Griffteil und Spindel bei gleichzeitig axialer Bewegbarkeit der Spindel innerhalb der Führung erzielt.

Unter einer "unrunden Führung" ist vorliegend jedwede Durchführung mit einer Innenkontur zu verstehen, die eine drehfeste Verbindung mit einem entsprechend unrunden Endabschnitt einer Spindel ermöglicht. Das Attribut "unrund" bezieht sich dabei auf den Querschnitt der Führung.

In weiterer Ausgestaltung der Erfindung ist in dem Griffteil oberhalb der unrunden Führung ein durchmessererweiterter Abschnitt eingebracht, in dem eine Schraube zur Verschraubung mit der Spindel des Mischventils, insbesondere einer Mischventil- oder Thermostatmischventilkartusche, angeordnet ist, deren Schraubenkopf von dem durchmessererweiterten Abschnitt vollständig aufnehmbar ist. Hierdurch ist eine vollständige Versenkung der Schraube in dem Griffteil ermöglicht.

In weiterer Ausgestaltung der Erfindung ist zwischen Schraubenkopf und Ausnehmung ein Federaufnahmeraum gebildet, in dem ein Federelement, vorzugsweise eine Schraubenfeder angeordnet ist. Selbstverständlich können neben Metallfedern auch weitere Federelemente wie bspw. Gummi- oder Elastomerelemente zum Einsatz kommen. Hierdurch ist eine integrierte, platzsparende Bereitstellung der erforderlichen Vorspannkraft auf das Griffstück erzielt.

In Weiterbildung der Erfindung weist der durchmessererweiterte Abschnitt an seinem oberen Ende eine zumindest bereichsweise umlaufende Farbmarkierung auf, dessen Farbe deutlich verschieden von der Farbe des Griffteils ist. Hierdurch ist eine Stellung des Griffteils außer Eingriff mit dem Mitnahmering optisch signalisiert. Dabei ist die Farbmarkierung vorzugsweise durch einen insbesondere in einer Warnfarbe ausgebildeten Farbring gebildet, der in eine endseitig des durchmessererweiterten Abschnitts hierfür angeordneten Absatz eingebracht ist.

In einer weiteren Ausgestaltung der Erfindung ist der Schraubenkopf mit einem Gewinde versehen, wobei ein Deckelteil angeordnet ist, das den durchmessererweiterten Abschnitt überragt und das mit dem Gewinde des Schraubenkopfes verschraubt ist. Bevorzugt weist der Schraubenkopf ein Außengewinde auf, auf das eine an dem Deckelteil angeformte Gewindehülse aufgeschraubt ist. Hierdurch ist eine Sicherung des Griffteils gegen unbefugte Bedienung ermöglicht. Eine vertikal Bewegung des Griffteils ist erst nach losschrauben des Deckelteils ermöglicht. Bevorzugt weist die Gewindehülse an ihrem freien Ende eine Innendurchmesserverengung auf. Hierdurch ist das Deckelteil verliersicher an dem Schraubenkopf gehalten.

In vorteilhafter Ausgestaltung der Erfindung weist das Deckelteil einen Werkzeugeingriff zur Einleitung eines Drehmoments auf das Deckelteil auf, der bevorzugt durch eine nicht standardisierte Eingriffsform gebildet ist. Hierdurch ist ein Lösen des Deckelteils durch unbefugtes Personal verhindert. Der Werkzeugeingriff sollte dabei so gestaltet sein, dass das Deckelteil nur mit speziellem, nicht standardisiertem Werkzeug lösbar ist. Derartige nicht standardisierte Eingriffsformen sind beispielsweise bei Radsicherungsmuttern bekannt.

In weiterer Ausgestaltung der Erfindung ist in dem Kartuschenaufnahmeraum ein Mischventil, insbesondere eine Mischventil- oder Thermostatmischventilkartusche angeordnet, deren Spindel mit Ihrem unrunden Endabschnitt in die unrunde Führung des Bediengriffs eingreift, wobei das Griffteil an dem Endabschnitt der Spindel axial verschiebbar ist und der Endabschnitt der Spindel mit einer axialen Gewindebohrung versehen ist, in die eine durch das Griffteil geführte Schraube eingeschraubt ist. Hierdurch ist die Kartusche vollständig in die Sanitärarmatur integriert und über das Griffteil bedienbar.

In weiterer Ausgestaltung der Erfindung ist die Schraube soweit in das Innengewinde der Spindel einschraubbar, das der zwischen Schraubenkopf und durchmessererweitertem Abschnitt des Griffteils gebildete Federaufnahmeraum derart reduzierbar ist, dass eine von diesem aufgenommene Feder blockierbar ist. Hierdurch ist eine Sicherung der Sanitärarmatur gegen unbefugte Bedienung erzielt. Eine Verschiebung des Griffteils zum außer Eingriff Bringen mit dem Mitnahmering ist erst durch Lösen der Schraube ermöglicht, die bevorzugt mit einem nicht standardisierten Werkzeugeingriff versehen ist.

In einer alternativen Ausgestaltung der Erfindung weist der Schraubenkopf ein Außengewinde auf, auf das ein Deckelteil mit einer an diesem angeformten Gewindehülse aufgeschraubt ist, wobei die Gewindehülse bevorzugt an ihrem freien Ende eine Innendurchmesserverjüngung, insbesondere einen nach innen kragenden umlaufenden Steg aufweist, wobei die Schraube bevorzugt mit der Spindel verklebt ist. Hierdurch ist das Griffteil gegen Fehlbedienung gesichert. Das Griffteil kann erst nach Losschrauben des Deckelteils axial bewegt und außer Eingriff mit dem Mitnehmerring gebracht werden. Durch Verkleben der Schraube mit der Spindel ist ein unbefugtes Lösen der Schraube verhindert.

Andere Ausbildungen und Ausgestaltungen der Erfindung sind in den übrigen Ansprüchen angegeben. Ausführungsbeispiele der Erfindung sind in den Zeichnungen dargestellt werden nachfolgend im Einzelnen beschrieben. Es zeigen:

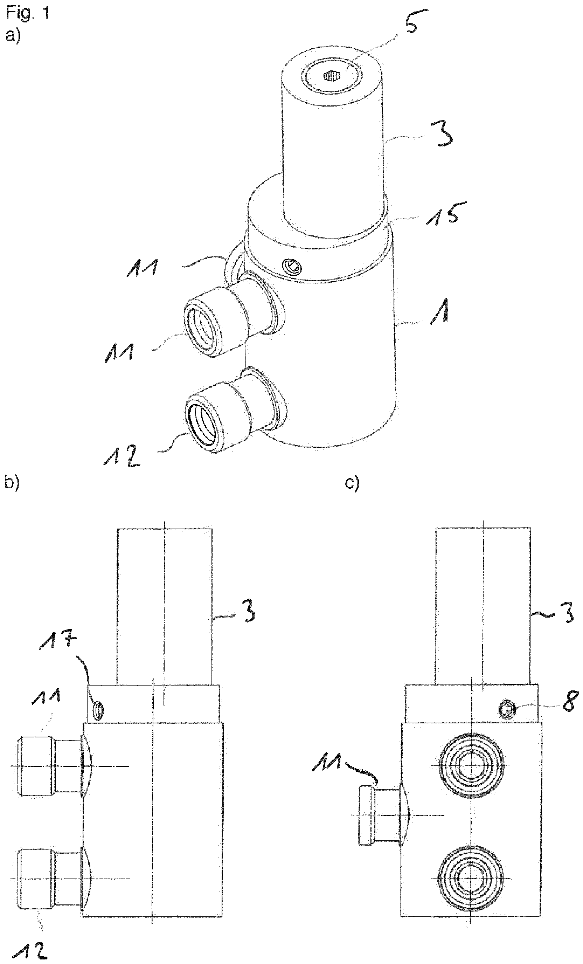

- Figur 1: die schematische Darstellung einer Sanitärarmatur
a) in räumlicher Darstellung;
b) in einer Seitenansicht;
c) in einer weiteren Seitenansicht;

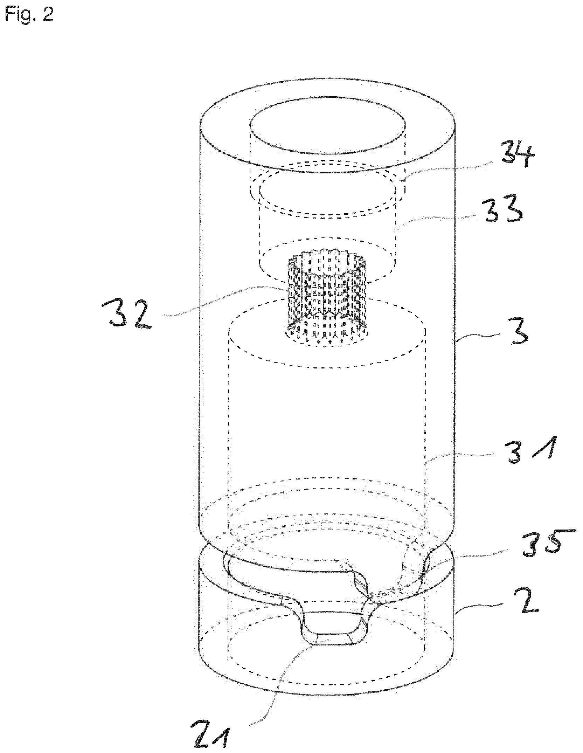

- Figur 2: die schematische Detaildarstellung des Griffteils mit Mitnehmerring der Sanitärarmatur aus Figur 1;
- Figur 3: die Darstellung der Sanitärarmatur aus Figur 1 mit eingesetzter Thermostat-Mischventilkartusche
a) im Teilschnitt;
b) in der Draufsicht;
- Figur 4: die Darstellung der Sanitärarmatur aus Figur 3 mit außer Eingriff positionierten Griffteil
a) in der Seitenansicht;
b) im Teilschnitt;
c) in der Draufsicht;
- Figur 5: die Detaildarstellung der Verbindung zwischen Griffteil und Spindel einer Sanitärarmatur in einer weiteren Ausführungsform;
- Figur 6: die Detaildarstellung der Verbindung zwischen Griffteil und Spindel einer Sanitärarmatur in einer dritten Ausführungsform und

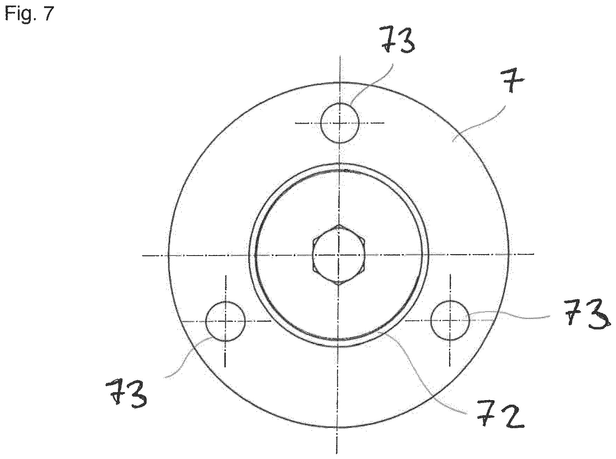

- Figur 7: die Darstellung des Griffteils der Anordnung gemäß Figur 6 in der Draufsicht.

Die als Ausführungsbeispiel gewählte Sanitärarmatur besteht im Wesentlichen aus einem Grundkörper 1, der einen Mitnehmerring 2 aufnimmt, auf dem ein Griffteil 3 angeordnet ist, das mit dem Mitnehmerring 2 in Eingriff bringbar ist.

Der Grundkörper 1 ist im Wesentlichen zylindrisch ausgebildet. Seitlich sind in den Grundkörper 1 zwei Zulaufkanäle 11 sowie ein Ablaufkanal 12 eingebracht, die in einem zylindrischen Kartuschenaufnahmeraum 13 münden, der derart exzentrisch in dem Grundkörper eingebracht ist, dass er von den Positionen der Zulauf- und Ablaufkanäle möglichst weit entfernt ist. Hierdurch ist in dem Grundkörper an diesen Stellen eine vergrößerte Wanddicke gebildet. Im Ausführungsbeispiel sind die Zulauf- und Ablaufkanäle durch in den Grundkörper 1 eingeschraubte Anschlussmuffen gebildet. Die Zulaufkanäle 11 münden in bekannter Art und Weise in auf der Innenmantelfläche des Grundkörpers 1 beabstandet zueinander angeordnete Ringnuten 14. An den Grundkörper 1 ist weiterhin ein ringförmiger Kragen 15 angeformt, der einen um den Kartuschenaufnahmeraum 13 angeordneten Absatz 16 nahezu tangiert, auf dem der Mitnehmerring 2 aufliegt. In den Kragen 15 ist eine Gewindebohrung 17 eingebracht, durch die eine Madenschraube 8 geführt ist, die gegen den Mitnehmerring 2 verspannbar ist.

Das Griffteil 3 ist im Wesentlichen hohlzylindrisch ausgebildet, wobei dessen Innenkontur unterschiedliche Innendurchmesser aufweist. An einen ersten Abschnitt 31 mit dem größten Innendurchmesser schließt sich eine durchmesserverringerte Führung 32 an, deren Innenwandung als Vielkantprofil ausgebildet ist. Die Führung 32 geht in einen durchmessererweiterten Abschnitt 33 über, der endseitig mit einem Absatz 34 versehen ist. An seiner dem Mitnehmerring 2 zugewandten Unterseite ist an das Griffteil 3 eine Nase 35 angeformt, die mit einer in dem Mitnehmerring 2 eingebrachten Ausnehmung 21 korrespondiert, mit der sie in Eingriff bringbar ist.

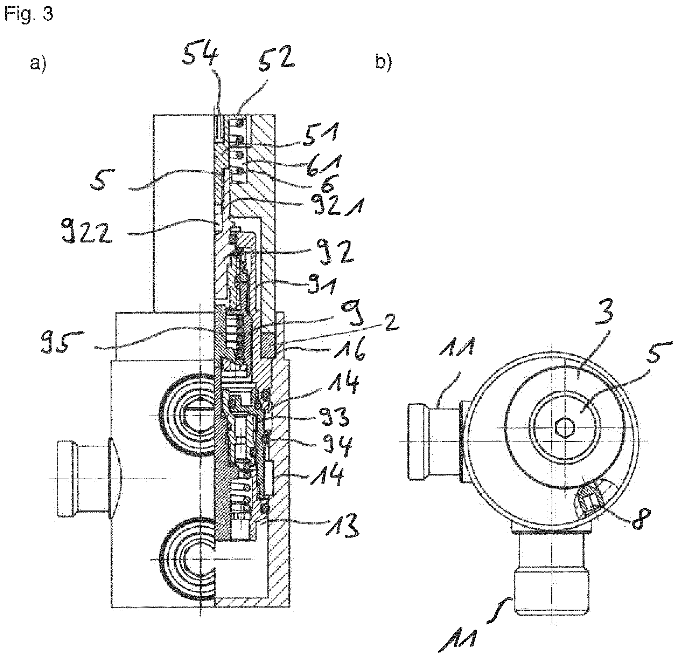

In Figur 3 ist die erfindungsgemäße Sanitärarmatur mit eingesetzter Thermostatmischventilkartusche gezeigt. Im Ausführungsbeispiel ist eine Thermostat-mischventilkartusche eingesetzt, wie sie in der DE 20 2017 100 756 U1 beschrieben ist. Hierbei handelt es sich um eine standardisierte, bewährte, Thermostatmischventilkartusche, wie beispielsweise auch in Sanitärmischarmaturen eingesetzt wird und die für die unterschiedlichsten Einsatzzwecke in großen Stückzahlen produziert wird. Nachfolgend wird lediglich auf einzelne Bauteile dieser Thermostatmischventilkartusche im Zusammenspiel mit der erfindungsgemäßen Sanitärarmatur, in die sie im Ausführungsbeispiel eingesetzt ist, eingegangen. Für weitere Einzelheiten der Thermostatmischventilkartusche sowie ihre Funktionsweise wird an dieser Stelle auf die Ausführungen in der DE 20 2017 100 756 U1 verwiesen.

Wie in Figur 3 a) ersichtlich, ist die Thermostatmischventilkartusche 9 in den Kartuschenaufnahmeraum 13 des Grundkörpers 1 der Sanitärarmatur eingesetzt, derart dass die beiden Fenster 93 der Thermostatmischventilkartusche 9 mit jeweils einer Ringnut 14 des Grundkörpers 1 fluchten. Zur gegenseitigen Abdichtung sind an der Thermostatmischventilkartusche 9 jeweils die Ringnuten 14 begrenzend Dichtungsringe 94 angeordnet. Die Thermostatmischventilkartusche 9 weist ein Kopfstück 91 auf, in dem mittels einer drehbar gelagerten Spindel 92 über ein Thermostatelement die Solltemperatur des Mischwassers einstellbar ist. An seinem aus dem Kopfstück 91 ragenden Ende weist die Spindel 92 einen als Außenvielkant ausgebildeten Endabschnitt 921 auf, in den axial eine Gewindesackbohrung 922 eingebracht ist.

Das Griffteil 3 ist mit seiner Führung 32 auf den Endabschnitt 921 der Spindel 92 der Thermostatmischventilkartusche 9 aufgeschoben, wobei die Führung 32 kürzer ist, als der Endabschnitt 921 der Spindel 92, sodass das Griffteil 3 entlang der Führung 32 auf dem Endabschnitt 921 der Spindel 2 axial verschiebbar ist. Das Griffteil 3 liegt derart auf dem Mitnehmerring 2 auf, dass dessen Nase 35 mit der Ausnehmung 21 des Mitnehmerrings 2 im Eingriff ist. Durch den durchmessererweiterten Abschnitt 33 ist eine Schraube 5 geführt, die in die Gewindesackbohrung 922 der Spindel 92 der Thermostatmischventilkartusche 9 eingeschraubt ist. Der Schraubenkopf 51 der Schraube 5 weist endseitig einen Kragen 52 auf, der im Wesentlichen bündig mit der Oberseite des Griffteils 3 ist. Dabei ist zwischen dem Kragen 52 und dem durch den durchmessererweiterten Abschnitt 33 und der Führung 32 ausgebildeten Absatz ein Federaufnahmeraum 61 begrenzt, in den eine Schraubenfeder 6 angeordnet ist. Über die Schraubenfeder 6 ist das Griffteil 3 gegen den Mitnehmerring 2 vorgespannt. Die Schraube 5 ist im Ausführungsbeispiel mit einem unsymmetrischen, nicht standardisierten Werkzeugeingriff 54 versehen.

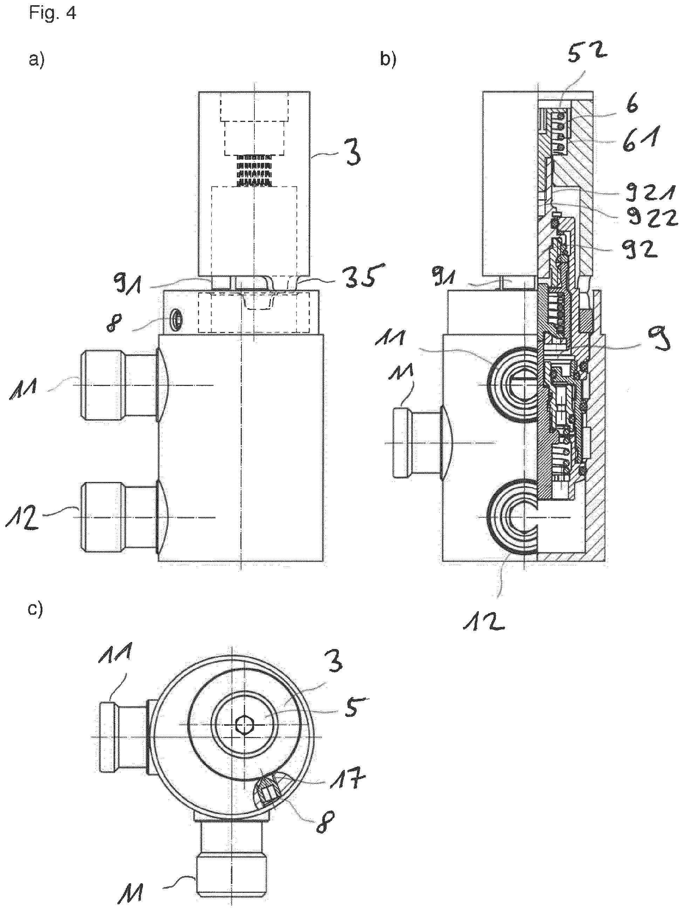

Die Einstellung der Solltemperatur erfolgt durch Drehen des Griffteils 3, das über den Vielkanteingriff zwischen Führung 32 und Endabschnitt 921 der Spindel 92 mit dieser drehfest verbunden ist. Durch die Drehung des Griffteils 3 wird zugleich der Mitnehmerring 2, in dessen Ausnehmung 21 die Nase 35 des Griffteils 3 eingreift, mitbewegt. Nachfolgend wird der Mitnehmerring 2 durch Einschrauben der Madenschraube 8, wodurch diese gegen den Mitnehmerring 2 verspannt wird, fixiert. Eine weitere Drehung des Griffteils 3 ist nun durch den Eingriff mit dem festgesetzten Mitnehmerring 2 gleichfalls verhindert. Zur temporären Einstellung der zur Desinfektion erforderlichen hohen Wassertemperatur wird das Griffteil 3 entgegen der Vorspannung der Schraubenfeder 6 nach oben bewegt, wodurch das Griffteil 3 außer Eingriff mit dem Mitnehmerring 2 gelangt und nachfolgend weiter gedreht werden kann. In dieser Heißwasserstellung liegt die Nase 35 des Griffteils 3 auf dem Rand des Mitnehmerrings 2 auf, wie in den Figuren 4 a), b) gezeigt. Nach erfolgter Desinfizierung kann die zuvor eingestellte Solltemperatur einfach wieder eingestellt werden, indem das Griffteil 3 soweit in Kaltwasserrichtung zurückgedreht wird, bis dessen Nase 35 über die Vorspannung der Schraubenfeder 6 in die Ausnehmung 21 des Mitnehmerrings 2 bewegt wird. In dieser Stellung ist das Griffteil 3 wiederum blockiert.

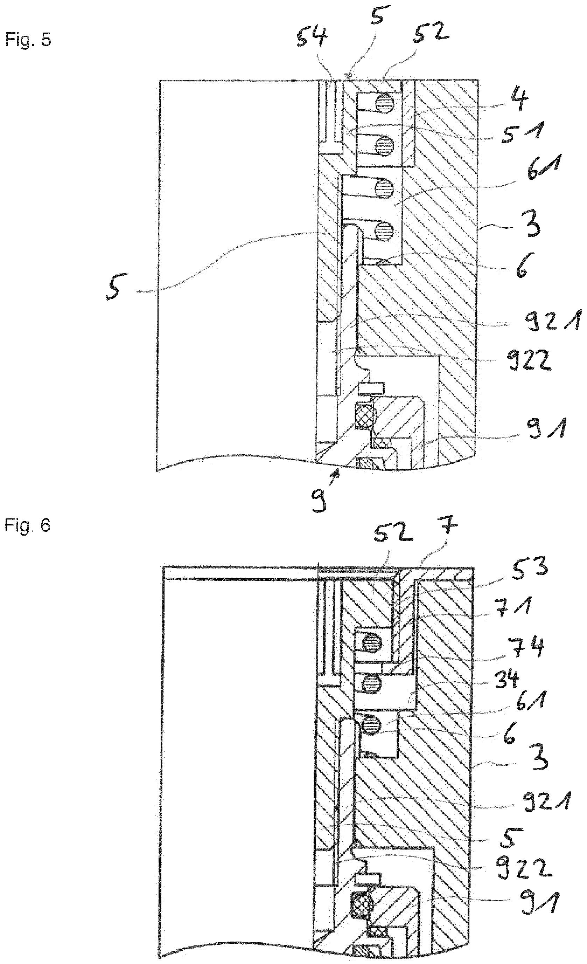

In Figur 5 ist die Verbindung zwischen Griffteil 3 und Spindel 52 einer erfindungsgemäßen Sanitärarmatur in einer weiteren Ausführungsform gezeigt. Hierbei ist die Schraube 5 derart ausgebildet, dass deren Kragen 52 bei nur teilweise in die Gewindesackbohrung 922 der Spindel 52 eingeschraubter Schraube mit der Oberseite des Griffteils 3 fluchtet. In dieser Position ist eine vertikale Bewegung des Griffteils 3 entlang des Endabschnitts 921 der Spindel 2 entgegen der Vorspannung der Schraubenfeder 6 ermöglicht. Im vollständig eingeschraubten Zustand liegt der Schraubenkopf 51 auf dem Endabschnitt 921 der Spindel 92 auf. Dabei ist der Federaufnahmeraum 61 derart vermindert, dass die Schraubenfeder 6 geblockt ist. (Mit "geblockt" ist vorliegend die Reduzierung des verbleibenden Federweges gegen Null durch Zusammenpressen der Federwindungen gemeint.) Ein Verschieben des Griffteils 2 entlang des Endabschnitts 921 der Spindel 92 ist somit verhindert. Das Griffteil ist in dieser Position gegen Fehlbedienung gesichert. In nicht sperrender Position der Schraube 5 gemäß Figur 5 ist ein Verschieben des Griffteils 3 entlang des Endabschnitt 921 der Spindel 2 ermöglicht, wodurch die Innenwandung des durchmessererweiterten Abschnitts 33 über den Schraubenkopf 51 der Schraube 5 hervorragt. Zur Kenntlichmachung dieser Heißwasserposition (es liegt kein Eingriff zwischen Mintnehmerring 2und Griffteil 3 vor) ist endseitig des durchmessererweiterten Abschnitts 33 ein Absatz 34 eingebracht, in den ein im Ausführungsbeispiel grellroter Farbring 4 eingesetzt ist.

In Figur 6 ist die Verbindung zwischen dem Griffteil 3 und dem Endabschnitt 921 der Spindel 92 einer erfindungsgemäßen Sanitärarmatur in einer dritten Ausgestaltung gezeigt. In diesem Ausführungsbeispiel ist der Kragen 52 der Schraube 5 mit einem Außengewinde 53 versehen. Auf dieses Außengewinde 53 ist ein Deckelteil 7 über eine an dieses angeformte Gewindehülse 71 aufgeschraubt. Endseitig ist die Gewindehülse 71 mit einem nach innen kragenden umlaufenden Steg 74 versehen, wodurch das Deckelteil 7 verliersicher an der Schraube 5 gehalten ist. Das Deckelteil 7 weist in Fortführung der Gewindehülse 71 eine Bohrung 72 zur Durchführung der Schraube 5 auf. Umlaufend sind in das Deckelteil 37 kreisrunde Einsenkungen 73, die einen Werkzeugeingriff zum Eingriff eines entsprechend ausgebildeten, nicht standardisierten Werkzeugs ausbilden.

Die Schraube 5 ist in die Gewindesackbohrung 922 des Endabschnitts 921 der Spindel 92 vollständig eingeschraubt und mit dieser verklebt. Bei vollständig auf den Schraubenkopf 51 aufgeschraubten Deckelteil 7 liegt dieses auf der Oberseite des Griffteils 3 auf und der Federaufnahmeraum 61 ist derart minimiert, dass die Schraubenfeder 6 blockiert ist. Eine Verschiebung des Griffteils 3 zur außer Eingriff Bringung mit dem Mitnehmerring 2 ist wirksam verhindert. Zur Einstellung einer für eine Desinfektion erforderlichen hohen Wassertemperatur wird das Deckelteil 7 von dem Kragen 52 des Schraubenkopfes 31 (mit Hilfe eines geeigneten Werkzeugs) losgeschraubt, bis der Steg 74 der Gewindehülse 71 an den Kragen 52 der Schraube 5 anschlägt. Hierdurch wird die Schraubenfeder 6 derart entspannt, dass eine Verschiebung des Griffteils 3 entlang des Endabschnitts 921 der Spindel 92 ermöglicht ist. Das Griffteil 3 kann nun mit dem Mitnehmerring 2 Außereingriff gebracht werden. Zugleich ist das Deckelteil 7 an dem Schraubenkopf 51 verliersicher gehalten.

Die vorstehenden Ausführungen in Bezug auf die in den Figuren dargestellten Ausführungsbeispielen gelten gleichsam für Ausführungsformen, bei denen in die Sanitärarmatur ein Mischventil (in Form einer Komponentenkombination oder einer Kartusche) ohne Thermostatelement eingesetzt sind.

## Patentansprüche

1. Sanitärarmatur zur Aufnahme eines über eine drehbar gelagerte, einen unrunden Endabschnitt (921) aufweisende Spindel (92) betätigbaren Mischventils, insbesondere einer Mischventil- oder Thermostatmischventilkartusche (9), umfassend einen Grundkörper (1), der mit einem axialen Kartuschenaufnahmeraum (13) für die Mischventilkartusche (9) versehen ist, und ein zur drehfesten Aufnahme des unrunden Endabschnitts (921) der Spindel ausgebildetes Griffteil (3),
**dadurch gekennzeichnet, dass**
in den Kartuschenaufnahmeraum (13) wenigstens zwei radial angeordnete Zulaufkanäle (11) und wenigstens ein angeordneter Ablaufkanal (12) münden, und dass die Sanitärarmatur einen Mitnehmerring (2) umfasst, der auf dem Grundkörper (1) drehbar angeordnet ist und auf dem das Griffteil (3) aufliegt, wobei Mitnehmerring (2) und Griffteil (3) über einen Eingriff in genau einer Relativposition zueinander formschlüssig verbindbar sind und wobei Mittel (8) zur temporären Fixierung einer Drehposition des Mitnehmerrings (2) an dem Grundkörper (1) angeordnet sind.

2. Sanitärarmatur nach Anspruch 1, **dadurch gekennzeichnet, dass** der Eingriff durch eine an dem Mitnehmerring (2) angeordnete Nase oder Ausnehmung (21) gebildet ist, die mit einer an dem Griffteil (3) angeordneten Ausnehmung bzw. Nase (35) korrespondiert.

3. Sanitärarmatur nach Anspruch 1, **dadurch gekennzeichnet, dass** der Kartuschenaufnahmeraum (13) zylindrisch und vorzugsweise außermittig in dem bevorzugt zylindrisch ausgebildeten Grundkörper (1) angeordnet ist.

4. Sanitärarmatur nach einem der vorgenannten Ansprüche, **dadurch gekennzeichnet, dass** die Mittel zur temporären Fixierung der Drehposition des Mitnehmerrings (2) eine Schraube (8) umfassen, die in einer in den Grundkörper (1) eingebrachten Gewindebohrung (17) geführt gegen den Mitnehmerring (2) verspannbar ist.

5. Sanitärarmatur nach einem der vorgenannten Ansprüche, **dadurch gekennzeichnet, dass** ein Federelement angeordnet ist, über welches das Griffteil (3) gegen den Mitnehmerring (2) vorgespannt ist.

6. Sanitärarmatur nach einem der vorgenannten Ansprüche, **dadurch gekennzeichnet, dass** in dem Griffteil (3) mittig eine axiale, unrunde Führung (32) zur Aufnahme des unrunden Endabschnitts (922) der Spindel (92) eines von dem Grundkörper aufgenommenen Mischventils, insbesondere einer Mischventilkartusche angeordnet ist.

7. Sanitärarmatur nach Anspruch 6, **dadurch gekennzeichnet, dass** in dem Griffteil (3) oberhalb der unrunden Führung (32) ein durchmessererweiterter Abschnitt (33) eingebracht ist, in dem eine Schraube (5) zur Verschraubung mit der Spindel (92) des Mischventils, insbesondere einer Mischventilkartusche (9) angeordnet ist, deren Schraubenkopf (51) von dem durchmessererweiterten Abschnitt (33) vollständig aufnehmbar ist.

8. Sanitärarmatur nach Anspruch 7, **dadurch gekennzeichnet, dass** zwischen Schraubenkopf (51) und durchmessererweitertem Abschnitt (33) ein Federaufnahmeraum (61) gebildet ist, in dem ein Federelement (6) angeordnet ist.

9. Sanitärarmatur nach Anspruch 7 oder 8, **dadurch gekennzeichnet, dass** der durchmessererweiterte Abschnitt (33) an seinem oberen Ende eine zumindest bereichsweise umlaufende Farbmarkierung aufweist, deren Farbe deutlich verschieden von der Farbe des Griffteils (3) ist, wobei die Farbmarkierung vorzugsweise durch einen besonders bevorzugt in einer Warnfarbe ausgebildeten Farbring (4) gebildet ist, der in einen endseitig des durchmessererweiterten Abschnitts (33) hierfür angeordneten Absatz (34) eingebracht ist.

10. Sanitärarmatur nach Anspruch 7 oder 8, **dadurch gekennzeichnet, dass** der Schraubenkopf (51) mit einem Gewinde versehen ist, wobei ein Deckelteil (7) angeordnet ist, das den durchmessererweiterten Abschnitt (33) überragt und das mit dem Gewinde des Schraubenkopfes (51) verschraubt ist.

11. Sanitärarmatur nach Anspruch 10, **dadurch gekennzeichnet, dass** der Schraubenkopf (51) ein Außengewinde (53) aufweist, auf das eine an dem Deckelteil (7) angeformte Gewindehülse (71) aufgeschraubt ist, wobei die Gewindehülse (71) bevorzugt an ihrem freien Ende eine Innendurchmesserverengung aufweist.

12. Sanitärarmatur nach Anspruch 11, **dadurch gekennzeichnet, dass** das Deckelteil (7) einen Werkzeugeingriff zur Einleitung eines Drehmoments auf das Deckelteil aufweist, der bevorzugt durch eine nicht standardisierte Eingriffsform gebildet ist.

13. Sanitärarmatur nach einem oder mehreren der vorgenannten Ansprüche, **dadurch gekennzeichnet, dass** in dem Kartuschenaufnahmeraum (13) ein Mischventil, insbesondere eine Mischventil- oder Thermostatmischventilkartusche (9) angeordnet ist, deren Spindel (92) mit ihrem unrunden Endabschnitt (921) in die unrunde Führung (32) des Griffteils (3) eingreift, wobei das Griffteil (3) auf dem Endabschnitt (921) der Spindel (92) axial verschiebbar ist und der Endabschnitt (921) der Spindel (92) mit einer axialen Gewindebohrung (922) versehen ist, in die eine durch das Griffteil (3) geführte Schraube (5) eingeschraubt ist.

14. Sanitärarmatur nach Anspruch 13, **dadurch gekennzeichnet, dass** die Schraube (5) soweit in die Gewindebohrung (922) der Spindel (92) einschraubbar ist, dass der zwischen Schraubenkopf (51) und durchmessererweitertem Abschnitt (33) des Griffteils (3) gebildete Federaufnahmeraum (61) derart reduzierbar ist, dass eine von diesem aufgenommene Feder blockierbar ist.

15. Sanitärarmatur nach Anspruch 13, **dadurch gekennzeichnet, dass** der Schraubenkopf (51) ein Außengewinde (53) aufweist, auf das ein Deckelteil (7) mit einer an diesem angeformten Gewindehülse (71) aufgeschraubt ist, wobei die Gewindehülse (71) bevorzugt an ihrem freien Ende eine Durchmesserverengung aufweist und wobei die Schraube (5) mit der Spindel (92) verklebt ist.

## Claims

1. Sanitary fitting for receiving a mixing valve, in particular a mixing valve or thermostat mixing valve cartridge (9), operable via a rotatably mounted spindle (92) having a non-circular end portion (921), comprising a base body (1), which is provided with an axial cartridge receiving space (13) for the mixing valve cartridge (9) and a handle part (3) designed to receive, in a rotationally fixed manner, the non-circular end portion (921) of the spindle, **characterised in that** at least two radially arranged inlet channels (11) and at least one arranged outlet channel (12) open into the cartridge receiving space (13) and that the sanitary fitting comprises a driver ring (2), which is rotatably arranged on the base body (1) and on which rests the handle part (3), wherein driver ring (2) and handle part (3) can be positively connected via an engagement in exactly one relative position to each other and wherein means (8) for the temporary fixing of a rotational position of the driver ring (2) to the base body (1) are arranged.

2. Sanitary fitting according to claim 1, **characterised in that** the engagement is formed by a lug or recess (21) arranged at the driver ring (2), which corresponds with a recess or lug (35) arranged at the handle part (3).

3. Sanitary fitting according to claim 1, **characterised in that** the cartridge receiving space (13) is cylindrically and preferably eccentrically arranged in the preferably cylindrically shaped base body (1).

4. Sanitary fitting according to one of the previous claims, **characterised in that** the means for the temporary fixing of the rotational position of the driver ring (2) comprise a screw (8), which is guided in a threaded hole (17) inserted in the base body (1) and can be clamped against the driver ring (2).

5. Sanitary fitting according to one of the previous claims, **characterised in that** a spring element is arranged, via which the handle part (3) is prestressed against the driver ring (2).

6. Sanitary fitting according to one of the previous claims, **characterised in that** an axial, non-circular guide (32) for receiving the non-circular end portion (922) of the spindle (92) of a mixing valve, in particular of a mixing valve cartridge, received by the base body, is centrally arranged in the handle part (3).

7. Sanitary fitting according to claim 6, **characterised in that** in the handle part (3), above the non-circular guide (32), a diameter-enlarged portion (33) is inserted, in which a screw (5) for screwing to the spindle (92) of the mixing valve, in particular of a mixing valve cartridge (9), is arranged, whose screw head (51) can be fully received by the diameter-enlarged portion (33).

8. Sanitary fitting according to claim 7, **characterised in that** between screw head (51) and diameter-enlarged portion (33) a spring receiving space (61) is formed, in which a spring element (6) is arranged.

9. Sanitary fitting according to claim 7 or 8, **characterised in that** the diameter-enlarged portion (33) has an at least partially circumferential colour mark at its upper end, whose colour is distinctly different from the colour of the handle part (3), wherein the colour mark is preferably formed by a colour ring (4) particularly preferably designed in a warning colour, which is inserted in a shoulder (34) arranged for this purpose at the end of the diameter-enlarged portion (33).

10. Sanitary fitting according to claim 7 or 8, **characterised in that** the screw head (51) is provided with a thread, wherein a cover part (7) is arranged, which projects beyond the diameter-enlarged portion (33) and which is screwed to the thread of the screw head (51).

11. Sanitary fitting according to claim 10, **characterised in that** the screw head (51) has an external thread (53), onto which a threaded sleeve (71) moulded on the cover part (7) is screwed, wherein the threaded sleeve (71) comprises a narrowing of the inner diameter preferably at its free end.

12. Sanitary fitting according to claim 11, **characterised in that** the cover part (7) has a tool engagement for introducing a torque to the cover part, which is preferably formed by a non-standard engagement form.

13. Sanitary fitting according to one or more of the previous claims, **characterised in that** in the cartridge receiving space (13) a mixing valve, in particular a mixing valve or thermostat mixing valve cartridge (9), is arranged, whose spindle (92) engages with its non-circular end portion (921) in the non-circular guide (32) of the handle part (3), wherein the handle part (3) is axially displaceable on the end portion (921) of the spindle (92) and the end portion (921) of the spindle (92) is provided with an axial threaded hole (922), into which a screw (5) guided through the handle part (3) is screwed.

14. Sanitary fitting according to claim 13, **characterised in that** the screw (5) can be screwed into the threaded hole (922) of the spindle (92) to such an extent that the spring receiving space (61) formed between screw head (51) and diameter-enlarged portion (33) of the handle part (3) can be reduced in such a manner that a spring received by it can be blocked.

15. Sanitary fitting according to claim 13, **characterised in that** the screw head (51) has an external thread (53), onto which is screwed a cover part (7) with a threaded sleeve (71) moulded thereon, wherein the threaded sleeve (71) comprises a narrowing in diameter preferably at its free end and wherein the screw (5) is glued to the spindle (92).

## Revendications

1. Robinetterie sanitaire servant à recevoir un mitigeur actionnable via une broche (92) en appui rotatif et présentant un segment terminal (921) non circulaire, en particulier à recevoir une cartouche (9) de mitigeur ou une cartouche (9) de mitigeur thermostatique, comprenant un corps de base (1) doté d'un volume axial (13) recevant la cartouche (9) de mitigeur, et une partie poignée (3) configurée pour recevoir, en l'empêchant de tourner, le segment terminal (921) non circulaire de la broche, **caractérisée en ce que** dans le volume réceptacle (13) de la cartouche aboutissent au moins deux conduits d'amenée (11) disposés radialement et au moins un conduit radial d'écoulement (12), et **en ce que** la robinetterie sanitaire comprend une bague d'entraînement (2) disposée sur le corps de base (1) de façon à pouvoir tourner et qu'elle applique sur la partie poignée (3), sachant que la bague d'entraînement (2) et la partie poignée (3) sont, via un engrènement, reliables entre elles par adhérence de formes sur une position relative précise l'une par rapport à l'autre et sachant que sont disposés des moyens (8) permettant d'immobiliser temporairement la bague d'entraînement (2) sur une position de rotation contre le corps de base (1).

2. Robinetterie sanitaire selon la revendication 1, **caractérisée en ce que** l'engrènement est formé par une saillie ou un évidement (21) disposé(e) contre la bague d'entraînement (2), laquelle/lequel épouse un évidement ou une saillie (35) disposé(e) contre la partie poignée (3).

3. Robinetterie sanitaire selon la revendication 1, **caractérisée en ce que** le volume réceptacle (13) de la cartouche est disposé cylindrique et préférentiellement de manière décentrée dans le corps de base (1) configuré de préférence cylindrique.

4. Robinetterie sanitaire selon l'une des revendications précédentes, **caractérisée en ce que** les moyens d'immobilisation temporaire de la position rotative de la bague d'entraînement (2) comprennent une vis (8) guidée par un alésage (17) taraudé ménagé dans le corps de base (1) et qu'il est possible de serrer contre la bague d'entraînement (2).

5. Robinetterie sanitaire selon l'une des revendications précédentes, **caractérisée en ce qu'**est disposé un élément ressort via lequel la partie poignée (3) est précontrainte contre la bague d'entraînement (2).

6. Robinetterie sanitaire selon l'une des revendications précédentes, **caractérisée en ce qu'**est disposé, centré dans la partie poignée (3), un guide (32) axial non circulaire recevant le segment terminal (922) non circulaire de la broche (92) d'un mitigeur logé dans le corps de base, en particulier d'une cartouche de mitigeur.

7. Robinetterie sanitaire selon la revendication 6, **caractérisée en ce que** dans la partie poignée (3) a été ménagé, au-dessus du guide (32) non circulaire, un segment (33) présentant un diamètre élargi dans lequel est disposée une vis (5) servant au raccord vissé avec la broche (92) du mitigeur, en particulier d'une cartouche de mitigeur (9), vis dont la tête (51) est entièrement logée dans le segment (33) présentant un diamètre élargi.

8. Robinetterie sanitaire selon la revendication 7, **caractérisée en ce qu'**entre la tête (51) de vis et le segment (33) présentant un diamètre élargi est formé un volume (61) réceptacle de ressort dans lequel est logé un élément ressort (6).

9. Robinetterie sanitaire selon la revendication 7 ou 8, **caractérisée en ce que** le segment (33) présentant un diamètre élargi comporte, à son extrémité supérieure, un marquage couleur au moins localement périphérique dont la couleur diffère nettement de celle de la partie poignée (3), sachant que le marquage couleur est formé de préférence par une bague colorée (4) configurée en couleur d'avertissement, bague qui est introduite dans un épaulement (34) disposé à cette fin dans l'extrémité du segment (33) à diamètre élargi.

10. Robinetterie sanitaire selon la revendication 7 ou 8, **caractérisée en ce que** la tête de vis (51) est munie d'un filetage, sachant qu'est disposée une partie couvercle (7) qui dépasse le segment (33) à diamètre élargi et qui est vissée avec le filetage de la tête de vis (51).

11. Robinetterie sanitaire selon la revendication 10, **caractérisée en ce que** la tête de vis (51) présente un filetage extérieur (53) sur lequel est vissée une douille filetée (71) modelée contre la partie couvercle (7), sachant que la douille filetée (71) présente de préférence à son extrémité libre un rétrécissement du diamètre intérieur.

12. Robinetterie sanitaire selon la revendication 11, **caractérisée en ce que** la partie couvercle (7) présente un engrènement pour outil permettant d'imprimer un couple rotatif à la partie couvercle, engrènement qui est formé de préférence par une forme d'engrènement non standardisée.

13. Robinetterie sanitaire selon une ou plusieurs revendications précédentes, **caractérisée en ce que** dans le volume (13) recevant la cartouche est disposé un mitigeur, en particulier une cartouche (9) de mitigeur ou une cartouche (9) de mitigeur thermostatique, dont la broche (92) engrène, par son segment terminal (921) non circulaire, dans le guidage (32) non circulaire de la partie poignée (3), sachant que la partie poignée (3) est déplaçable axialement sur le segment terminal (921) de la broche (92) et que le segment terminal (921) de la broche (92) est muni d'un alésage taraudé (922) axial dans lequel est vissée une vis (5) traversant guidée la partie poignée (3).

14. Robinetterie sanitaire selon la revendication 13, **caractérisée en ce que** la vis (5) peut être vissée dans l'alésage taraudé (922) de la broche (92) au point que le volume (61) recevant le ressort, formé entre la tête de vis (51) et le segment (33) à diamètre élargi de la partie poignée (3), peut être réduit de sorte à pouvoir bloquer un ressort logé en lui.

15. Robinetterie sanitaire selon la revendication 13, **caractérisée en ce que** la tête de vis (51) présente un filetage extérieur (53) sur lequel une partie couvercle (7) est vissée avec une douille taraudée (71) modelée contre elle, sachant que la douille taraudée (71) présente de préférence à son extrémité libre une réduction de diamètre et sachant que la vis (5) est collée avec la broche (92).
